# EUROPÄISCHE PATENTSCHRIFT

(11) **EP 2 020 592 B1**
(45) Veröffentlichungstag und Bekanntmachung des Hinweises auf die Patenterteilung: **28.04.2010**
(21) Anmeldenummer: 07014851.5
(22) Anmeldetag: 28.07.2007
(51) Int. Cl.: G01F 1/28, G01P 13/00, H01H 35/40

(54) **Vorrichtung zur Überwachung des Durchflusses eines Mediums in einer Durchflusseinrichtung**
Device for monitoring the throughflow of a medium in a throughflow device
Dispositif destiné à la surveillance du débit d'un milieu dans un dispositif traversé par un débit

(43) Veröffentlichungstag der Anmeldung: 04.02.2009
(73) Patentinhaber: SIKA Dr.Siebert & Kühn GmbH & Co. KG., 34260 Kaufungen (DE)
(72) Erfinder: Trinter, Frank, 34260 Kaufungen (DE)
(74) Vertreter: Walther, Walther & Hinz GbR

(56) Entgegenhaltungen:
- DE-A1- 2 531 554
- DE-A1- 3 801 770
- FR-A- 2 806 208
- US-B1- 6 548 775

## Beschreibung

Die vorliegende Erfindung betrifft eine Vorrichtung zur Überwachung des Durchflusses eines Mediums in einer Durchflusseinrichtung, z. B. einem Rohr, einer Wasserverteilstation, einem Heizungsboiler o. ä., umfassend ein in einem Gehäuse schwenkbar gelagertes Paddel, das endseitig einen Paddelkopf aufweist, der in die Strömung der Durchflusseinrichtung hineinragt, wobei der Paddelschaft einander gegenüberliegend zwei Achsstummel aufweist, die von dem Gehäuse drehbar aufnehmbar sind.

Eine solche Vorrichtung zur Überwachung des Durchflusses eines Mediums, kurz als Strömungskontrollschalter oder Strömungswächter bezeichnet, umfasst - wie bereits ausgeführt - ein Paddel, wobei das Paddel bei der Auslenkung aus seiner Ausgangsstellung ein Signal auslöst, das das Vorhandensein einer Strömung anzeigt. Hierbei ist üblicherweise vorgesehen, dass das Paddel endseitig einen Magneten besitzt, der beispielsweise mit einem entsprechenden Reedkontakt zusammenwirkt. Ein solcher Strömungskontrollschalter hat die Aufgabe, bei Über- oder Unterschreiten einer vorher festgelegten Durchflussmenge einen entsprechenden Schaltvorgang auszulösen. Hierzu ragt das Paddel des Kontrollschalters in das Medium hinein, wobei entsprechend der jeweiligen Durchflussmenge eine Auslenkung des verschwenkbar in dem Gehäuse angeordneten Paddels erfolgt.

Ein solcher Strömungskontrollschalter ist aus dem Stand der Technik hinreichend bekannt. In diesem Zusammenhang wird beispielsweise auf das Deutsche Patent 38 01 770 C2 verwiesen. Die einzelnen Teile eines solchen Strömungskontrollschalters sind üblicherweise Kunststoffspritzteile, die lediglich zusammengebaut werden müssen.

Aus der US 6,548,775 B1 ist ein Strömungskontrollschalter der eingangs genannten Art bekannt. Das Paddel besitzt hierbei seitliche Arme mit endseitig angeordneten Achsstummeln, die durch eine entsprechende Bohrung im Gehäuse des Schalters drehbar aufnehmbar sind. Um das Einführen der Achsstummel in die entsprechenden Bohrungen zu erleichtern, weist das Gehäuse im Bereich der Bohrungen jeweils eine Auflaufschräge auf. Gleichwohl ist die Montage aufwändig. Da das Gehäuse von dem Einschnappen der Achsstummel in die jeweilige Bohrung verformt wird, besteht zudem die Gefahr, dass die Achsstummel bei der Montage abbrechen.

Strömungskontrollschalter unterliegen einem erheblichen Preisdruck, insbesondere auch deshalb, weil diese Strömungskontrollschalter im Wesentlichen in Fernost hergestellt werden. Insbesondere bei der Montage der einzelnen Teile eines solchen Strömungskontrollschalters wird relativ viel Zeit darauf verwendet, um das Paddel im Gehäuse zu befestigen.

Der Erfindung liegt daher die Aufgabe zu Grunde, die Montage des Paddels im Gehäuse zu vereinfachen; dies vor dem Hintergrund, die Montagezeit zu vermindern, um hierdurch die Herstellung eines derartigen Strömungskontrollschalters kostengünstiger zu gestalten.

Zur Lösung dieser Aufgabe wird erfindungsgemäß vorgeschlagen, dass der Paddelschaft im Bereich der Achsstummel in Richtung der Längsachse der Achsstummel dadurch elastisch aufnehmbar ist, dass der Paddelschaft im Bereich der Achsstummel eine Öffnung nach Art eines Schlitzes aufweist. Die Montage des Paddels im Gehäuse gestaltet sich nunmehr insofern einfach, als der Paddelschaft mittels Daumen und Zeigefinger zusammengepresst und hierbei so verformt wird, dass die Achsstummel problemlos in ihre Aufnahmen im Gehäuse gebracht werden können. Wird der Druck auf den Paddelschaft vermindert, schnappen die beiden Achsstummel in ihre entsprechenden Lagerungen ein.

Die Breite des Schlitzes ist hierbei derart gewählt, dass dann, wenn die Schenkel des geschlitzten Paddelschaftes aneinander stoßen, der Paddelschaft mit den Achsstummeln in das Gehäuse einschiebbar ist. Das Gehäuse besitzt zur drehbaren Aufnahme der Achsstummel entsprechende Lagerbuchsen, die sich im einfachsten Fall als Öffnungen im Gehäuse darstellen.

Anhand der Zeichnungen wird die Erfindung nachstehend beispielhaft näher erläutert.
- Figur 1: zeigt den Strömungskontrollschalter, umfassend das Gehäuse und das vom Gehäuse aufgenommene Paddel;
- Figur 2: zeigt das Paddel.

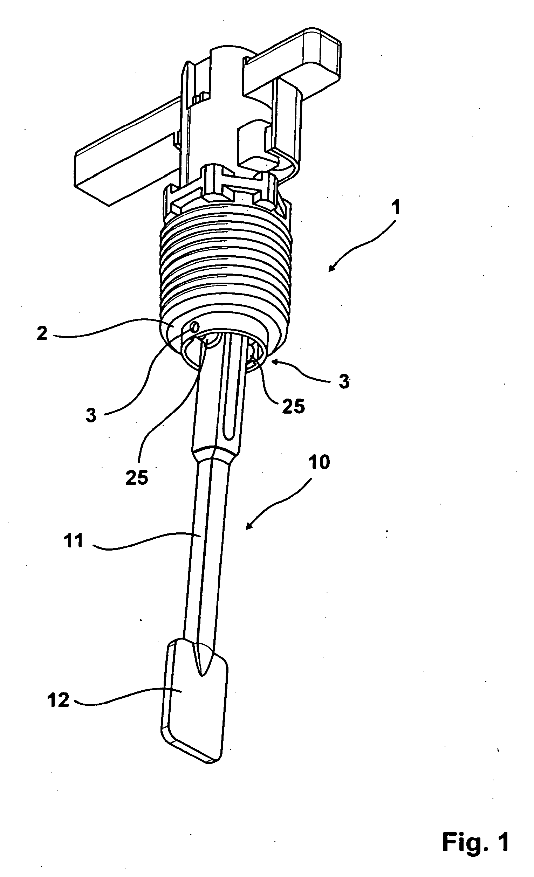

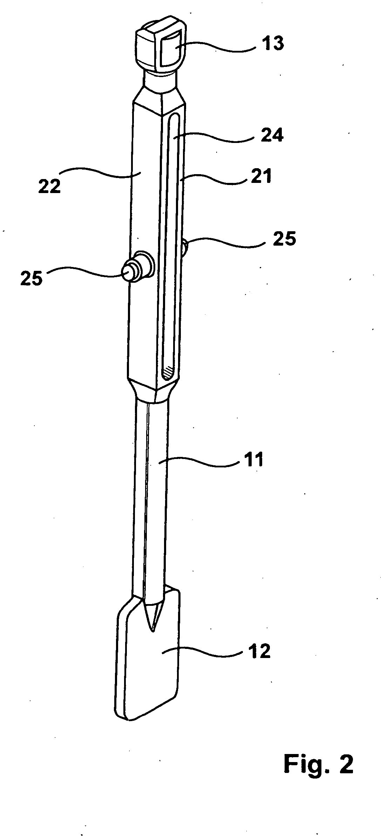

Der insgesamt mit 1 bezeichnete Strömungskontrollschalter umfasst das Gehäuse 2 sowie das insgesamt mit 10 bezeichnete Paddel. Das Gehäuse 2 umfasst zwei Lagerbuchsen, die einander gegenüberliegend im Gehäuse 2 angeordnet sind. Das Paddel 10 (Figur 2) umfasst einen Paddelschaft 11, den Paddelkopf 12 sowie den endseitig am Paddelschaft angeordneten Magneten 13. Der Paddelschaft 11 besitzt einen Abschnitt 21, innerhalb dem der Paddelschaft unter Bildung zweier Schenkel 22, 23 durch einen Schlitz 24 geteilt ist. Außen an den Schenkeln 22, 23 befinden sich die beiden Achsstummel 25, die jeweils durch die Lagerbuchse 3 des Gehäuses 2 aufnehmbar sind. Durch Druck auf die beiden Schenkel 21, 22, beispielsweise mittels Daumen und Zeigefinger, werden die Schenkel so weit verformt, dass der Paddelschaft mit den Achsstummeln 25 in das Gehäuse 2 einführbar ist (siehe Figur 1), wobei dann die Achsstummel in die Lagerbuchsen 3, die sich im vorliegenden Fall als Öffnungen im Gehäuse darstellen, einschnappen können. Es ist offensichtlich, dass hierdurch die Montagezeit eines Strömungskontrollschalters erheblich vermindert werden kann.

## Patentansprüche

1. Vorrichtung zur Überwachung des Durchflusses eines Mediums in einer Durchflusseinrichtung, z. B. einem Rohr, einer Wasserverteilstation, einem Heizungsboiler o. ä., umfassend ein in einem Gehäuse schwenkbar gelagertes Paddel, das endseitig einen Paddelkopf aufweist, der in die Strömung der Durchflusseinrichtung hineinragt, wobei der Paddelschaft (11) einander gegenüberliegend zwei Achsstummel (25) aufweist, die von dem Gehäuse (2) drehbar aufnehmbar sind, wobei der Paddelschaft (11) in das Gehäuse einführbar ist und die Achsstummel (25) in Lagerbuchsen (3) einschnappen können,
**dadurch gekennzeichnet,**
**dass** der Paddelschaft (11) im Bereich der Achsstummel (25) in Richtung der Längsachse der Achsstummel elastisch **dadurch** verformbar ist, dass der Paddelschaft (11) im Bereich der Achsstummel eine Öffnung (24) nach Art eines Schlitzes aufweist.

## Claims

1. Device for monitoring the throughflow of a medium in a throughflow device, for example a pipe, a water distributor station, a heating boiler or the like, comprising a paddle, which is pivotably mounted in a housing and has at the end a paddle head protruding into the flow of the throughflow device, wherein the paddle shank (11) has two mutually opposite stub axles (25) which are rotatably receivable by the housing (2), wherein the paddle shank (11) is introducible into the housing and the stub axles (25) can snap into bearing bushes (3), **characterised in that** the paddle shank (11) is resiliently deformable in the region of the stub axles (25) in the direction of the longitudinal axis of the stub axles in such a manner that the paddle shank (11) in the region of the stub axles has an opening (24) in the form of a slot.

## Revendications

1. Dispositif pour la surveillance du débit d'un milieu dans un dispositif traversé par un écoulement, par exemple dans un tuyau, une station de distribution d'eau, une chaudière de chauffage ou équivalent, comprenant une palette montée pivotante dans un boîtier et qui comporte à une extrémité une tête de palette qui plonge dans le courant du dispositif traversé par un écoulement, dans lequel la tige de la palette (11) comporte deux tourillons opposés (25) qui peuvent être reçus mobiles en rotation par le boîtier (2), dans lequel la tige de la palette (11) peut être insérée dans le boîtier et les tourillons (25) peuvent s'encliqueter dans des coussinets (3),
**caractérisé en ce que,**
dans la zone des tourillons (25), la tige (11) de la palette est rendue élastiquement déformable dans la direction de l'axe longitudinal des tourillons par le fait que, dans cette zone des tourillons, la tige (11) de la palette comporte une ouverture (24) du type fente.
